# EUROPÄISCHE PATENTANMELDUNG

(11) **EP 2 216 556 A1**
(43) Veröffentlichungstag der Anmeldung: **11.08.2010**
(21) Anmeldenummer: 09001829.2
(22) Anmeldetag: 10.02.2009
(51) Int. Cl.: F16B 35/04

(54) **Verbindungselement mit gerichtet erstarrtem Gefüge**

(71) Anmelder: Siemens Aktiengesellschaft, 80333 München (DE)
(72) Erfinder: Bryk, Roderich, 52349 Düren (DE); Buchholz, Björn, 47137 Duisburg (DE); Sander, Jens, 46236 Bottrop (DE); Shevchenko, Vadim, 44265 Dortmund (DE); Sonnen, Stephan, 45289 Essen (DE); Strohmeier, Oliver, Dr., 47167 Duisburg (DE)

(57) **Zusammenfassung**

Verbindungselement (7,7'), das aufweist zumindest einen ersten Bereich (13,13',13"), zumindest elnen zweiten Bereich (10,10'), wobei zumindest der erste Bereich (13,13',13") eine höhergeordnete Struktur aufweist, wobel eine stãngelförmige Struktur (DS) und eine einkristallin erstarrte Struktur (SX) eine höhergeordnete Struktur gegenüber einer ungerichtet erstarrten Struktur (CC) darstellen und eine SX-Struktur (SX) eine höhergeordnete Struktur gegenüber einer DS-Struktur (DS) darstellt.

## Beschreibung

Die Erfindung betrifft ein Verbindungselement mit gerichtet erstarrtem Gefüge.

Die gerichtete Erstarrung erfolgt nach heutigem Stand der Technik im sogenannten Bridgman-Verfahren. Hier werden Bauteile durch den thermischen Gradienten im Gießofen stängelkristallin (DS) oder einkristallin (SX) gerichtet erstarrt. Für die fehlerfreie Erstarrung des einkristallinen Bereichs ist aber ein sehr langer Prozesszyklus erforderlich.

Zur Umgehung dieser Limitierungen werden auf anlagentechnischer Seite Anstrengungen unternommen, den wirkenden thermischen Gradienten im Ofen zu verbessern (z.B. durch Gaskühlung, Kühlung in einem keramischen Fluidbett oder in einer flüssigen Metallschmelze (LMC)). Weiterhin wurden Legierungen im Hinblick auf ihre Gießbarkeit optimiert, was aber für gewöhnlich mit einem Kompromiss in den mechanischen Eigenschaften erkauft werden musste.

Beim Verschrauben von Bauteilen, die im Hochtemperaturbereich eingesetzt werden, kommt es zu Relaxationsprozessen des Verschraubungselements, die die Vorspannkraft der verschraubten Bauteile erheblich reduzieren. Zusätzlich tritt Kriechen auf, welches die Funktionsweise ebenfalls einschränkt. Die Lebensdauer einer Schraubenverbindung ist im Hochtemperaturbereich wesentlich kürzer als die Lebensdauer einer Verbindung im Tieftemperaturbereich.
Um dieses Problem zu minimieren werden Verbindungselemente mit großem Durchmesser verwendet, um eine möglichst große Vorspannkraft einstellen zu können. Hierdurch werden jedoch auch die Bauteile, die verschraubt werden, im Verschraubungsbereich größer.
Als Basiswerkstoffe für Schrauben/Gewindestangen werden 21CrMoV5-7 und 40CrMoV4-6 verwendet. Diese Werkstoffe werden durch konventionelle Gussverfahren gegossen und zu Stangenmaterial weiterverarbeitet. Der konventionell gegossene Werkstoff zeichnet sich dadurch aus, dass er aus vielen, zufällig verteilten, Körnern bzw. Korngrenzen besteht. Diese Korngrenzen wirken sich im Hochtemperaturbereich negativ auf die Kriechfestigkeit aus (vgl. Literatur Bürgel: "Handbuch der Hochtemperaturwerkstoffe"). Die Lebensdauer der Schrauben ist bedingt durch Relaxationsprozesse und Kriechprozesse stark begrenzt. Die Funktionsweise einer Schraube (Einstellen einer Vorspannkraft zur Übertragung von Kräften) ist nur für eine bestimmte Zeit möglich.

Die Aufgabe der Erfindung ist es, oben genannte Probleme zu überwinden.

Die Aufgabe wird gelöst durch ein Verbindungselement gemäß Anspruch 1 mit einem ersten und einem zweiten Bereich.
In den Unteransprüchen sind weitere vorteilhafte Maßnahmen aufgelistet, die beliebig miteinander kombiniert werden können, um weitere Vorteile zu erzielen.

Es wurde festgestellt, dass eine SX- bzw. DS-Struktur aufgrund einer im Betrieb niedrigeren Beanspruchungstemperatur und eines unterschiedlich wirkenden Belastungskollektives im zweiten Bereich nicht benötigt wird. Dazu können jedoch chemische Elemente in der Legierung erforderlich sein, die eine für SX/DS-Erstarrung gedachte Legierung nicht unbedingt beinhaltet.

Dazu ist die Legierung im zweiten Bereich vorzugsweise zu modifizieren bzw. ist für das gesamte Bauteil eine Legierung zu verwenden, die der Beanspruchung sowohl im zweiten Bereich als auch im ersten Bereich Rechnung tragen kann.

Die gesamte Erstarrung solcher Verbindungselemente kann in situ in einem Prozess nach den drei folgenden technischen Merkmalen erfolgen:
1. DS-SX-Erstarrung des 1. Bereich mit reduzierter Vormaterialmenge;
   dann Umschaltung der Prozessparameter und Zugabe einer zweiten Legierung zur Erstarrung des zweiten Bereichs.
2. DS-SX-Erstarrung des ersten Bereichs mit gesamter Vormaterialmenge;
   dann Umschaltung der Prozessparameter und Zugabe zusätzlicher Legierungselemente; Erstarrung des zweiten Bereichs.
3. DS-SX-Erstarrung des Schaufelblattes mit gesamter Vormaterialmenge (Legierung ist sowohl für den 1. Bereich als auch für den 2. Bereich geeignet);
   dann Umschaltung der Prozessparameter und Erstarrung des zweiten Bereichs.

Es zeigen:
- Figur 1, 2: Verbindungsmittel,
- Figur 3: eine Liste von Superlegierungen,
- Figur 4: eine Gasturbine.

Die Beschreibung und die Figuren stellen nur Ausführungsbeispiele der Erfindung dar.

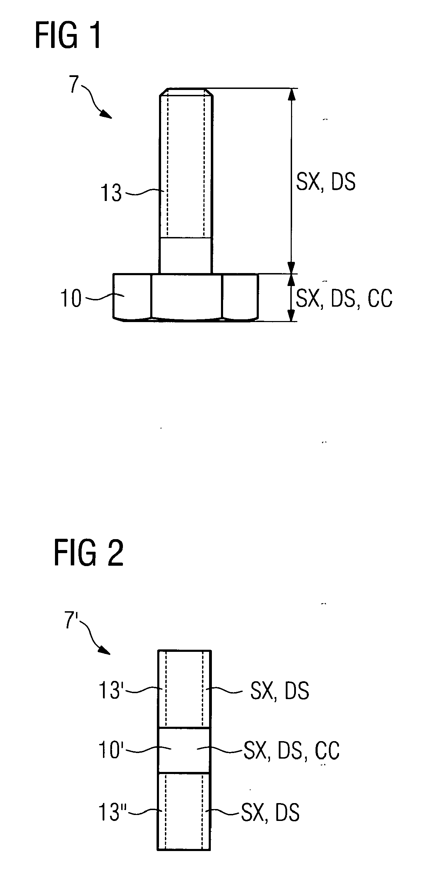

Die Figur 1 zeigt eine Schraube 7 als ein Verbindungsmittel. Eine stängelförmige Struktur (DS) und eine einkristallin erstarrte Struktur (SX) stellen eine höhergeordnete Struktur gegenüber einer ungerichtet erstarrten Struktur (CC) dar und eine SX-Struktur (SX) stellt eine höhergeordnete Struktur gegenüber einer DS-Struktur (DS) dar.
Die Schraube 7 weist vorzugsweise im Gewinde 13 (erster Bereich) eine höhergeordnete Struktur und im Gewindekopf 10 (zweiter Bereich) eine untergeordnete Struktur auf. Vorzugsweise ist der Kopf 10 polykristallin (CC) und die Gewindestange 13 einkristallin (SX) ausgebildet.

Die Kombinationsmöglichkeiten sind also:

| Kopf (10) | Gewinde (13) |
|---|---|
| CC | DS |
| CC | SX |
| DS | SX |

Der erste Bereich 13 besteht vorzugsweise aus einer einkristallinen Struktur (SX). Die einkristalline Struktur (SX) erstreckt sich von einer Spitze und vorzugsweise bis zur Oberseite des Kopfes 10 des zweiten Bereiches.

Je nach mechanischer Anforderung kann sich die einkristalline Struktur (SX) von dem Gewinde 13 auch bis zu einer gewissen Dicke in den Kopf 10 hinein erstrecken. Dann beginnt innerhalb des Kopfes eine DS- oder CC-Struktur.

Die Vorteile der unterschiedlichen Gefüge sind:
- Reduzierung des Ausschusses bei der Herstellung von SX- oder DS-Verbindungselementen
- deutliche Kostenreduzierung bei der Verfahrensführung
- Nutzbarmachung von SX-DS-Strukturen für größere Verbindungselemente
- lokale Optimierung des Gewindes bzw. Kopfes im Hinblick auf das lokal wirkende Beanspruchungskollektiv.

In Figur 2 ist ein Verbindungselement 7' gezeigt mit einem zweiten Bereich 10' und zwei ersten Bereichen 13', 13". Obige Tabelle für die Schraube 7 gilt entsprechend für das Verbindungselement 7'.

| Bereich (10') | Gewinde (13', 13'') |
|---|---|
| CC | DS |
| CC | SX |
| DS | SX |

Das Problem des Relaxierens und des Kriechens kann dadurch verringert werden, in dem der schädliche Einfluss der Korngrenzen verringert wird. Um dies zu erreichen, sollte der verwendete Schraubenwerkstoff gerichtet erstarrt hergestellt werden. Die Schraube 7 zeigt nun ein besseres Hochtemperaturverhalten gegenüber den konventionellen Schrauben, da quer zur Lastrichtung keine Korngrenze liegt. Das Prinzip ist für Gewindestifte 7' ebenfalls geeignet. Sobald Schrauben 7 gerichtet erstarrt werden, führen die Korngrenzen im Bereich des Kopfes zu einer erheblichen Schwächung, da die Korngrenzen hier auf Schub beansprucht werden. Dieses negative Verhalten wird minimiert, indem der Kopfbereich konventionell gegossen und der Schaft gerichtet erstarrt hergestellt wird.

Folgende Vorteile ergeben sich aus der technischen Lösung für die Schraube:
- Die Relaxionsverluste werden sehr stark verkleinert => die Lebensdauer der Verbindungselemente nimmt zu.
- Es können (wahrscheinlich) kleinere Schrauben/Gewindestangen verwendet werden, da höhere Spannungen zugelassen werden können => weniger Materialeinsatz, kleinere Bauteile.
- Längere Lebensdauer der Schraube => längere Laufzeiten der Maschinen, bis Wartung erforderlich ist.
- Das Gefüge sollte es ermöglichen, bei höheren Temperaturen einsetzbar zu sein, als die derzeit verwendeten Gefüge => Temperatur kann bei Upgrades von älteren Maschinen erhöht werden und die Schrauben/Gewindestangen müssen nicht erneuert werden.
- Temperaturbeständigere Schrauben ermöglichen eine Erhöhung der Temperatur in der Maschine => besserer Wirkungsgrad.

Alle erläuterten Vorteile führen zu einer langfristigen Kostenersparnis, da die Anzahl der Wartungsintervalle der Verbindungselemente 7, 7' verringert und die Laufzeiten von Maschinen erhöht werden.

Vorzugsweise besteht die gesamte Schraube 7 (Fig. 1) oder das Verbindungselement 7' (Fig. 2) entweder nur aus einer DS- oder einer SX-Struktur.

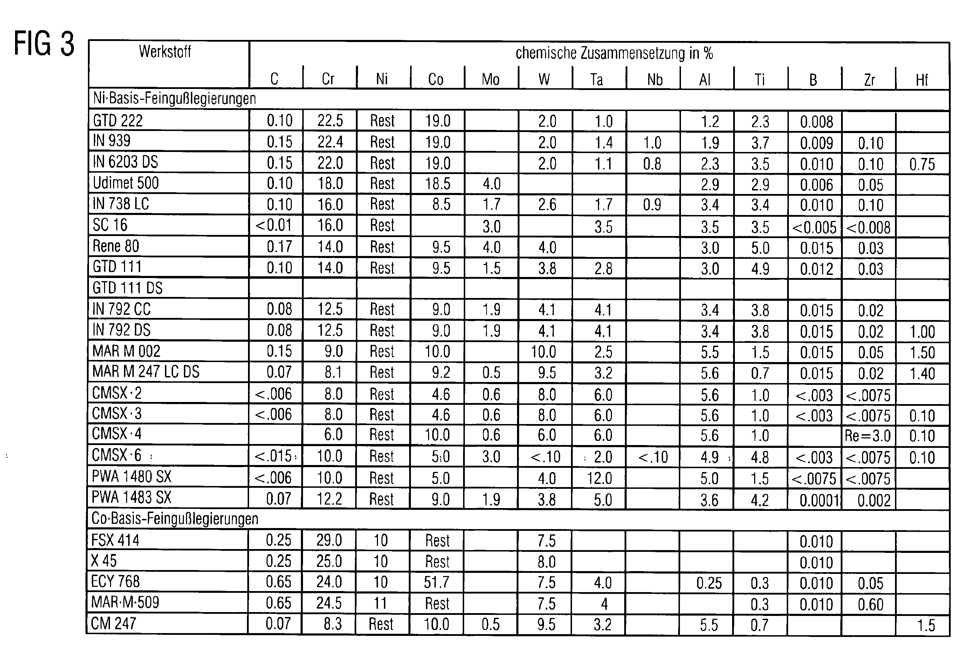

Mögliche Legierungen für die Verbindungselemente 7, 7' sind in Figur 3 aufgelistet.

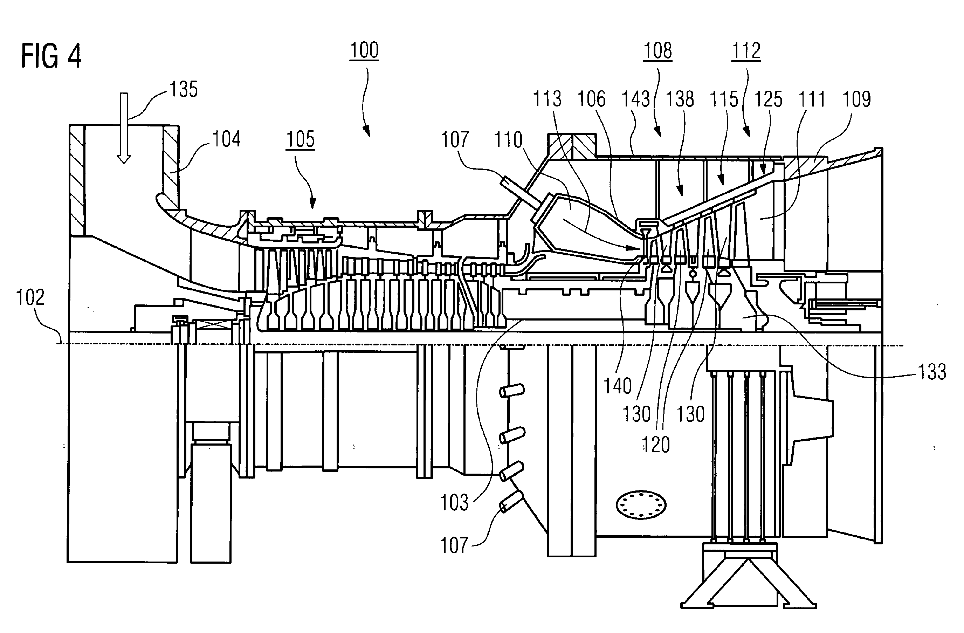

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verbindungselement (7, 7'),
das aufweist
zumindest einen ersten Bereich (13, 13', 13"),
zumindest einen zweiten Bereich (10, 10'),
wobei zumindest der erste Bereich (13, 13', 13") eine höhergeordnete Struktur aufweist,
wobei eine stängelförmige Struktur (DS) und eine einkristallin erstarrte Struktur (SX) eine höhergeordnete Struktur gegenüber einer ungerichtet erstarrten Struktur (CC) darstellen und
eine SX-Struktur (SX) eine höhergeordnete Struktur gegenüber einer DS-Struktur (DS) darstellt.

2. Verbindungselement nach Anspruch 1,
bei dem der erste Bereich (13, 13', 13") gegenüber dem zweiten Bereich (10, 10') eine höhergeordnete Struktur aufweist.

3. Verbindungselement nach Anspruch 1,
bei dem der erste Bereich (13, 13', 13'') und der zweite Bereich (10, 10') eine DS- oder SX-Struktur aufweisen.

4. Verbindungselement nach Anspruch 1, 2 oder 3,
wobei der erste Bereich (13, 13', 13'') eine einkristalline Struktur (SX) aufweist.

5. Verbindungselement nach Anspruch 1, 2 oder 3,
bei dem der erste Bereich (13, 13', 13'') eine DS-Struktur aufweist.

6. Verbindungselement nach Anspruch 1, 2, 4 oder 5,
bei dem der zweite Bereich (10, 10') eine ungerichtet erstarrte Struktur (CC) aufweist.

7. Verbindungselement nach Anspruch 1, 2, 3, 4 oder 5,
bei dem der zweite Bereich (10, 10') eine stängelförmige Struktur (DS) aufweist.

8. Verbindungselement nach Anspruch 1, 2, 3, 4, 5, 6 oder 7,
bei dem das Verbindungselement (7) nur aus einem ersten Bereich (13) und einem zweiten Bereich (10) besteht.

9. Verbindungselement nach Anspruch 1, 2, 3, 4, 5, 6 oder 7,
bei dem das Verbindungselement (7') nur aus zwei ersten Bereichen (13', 13') und einem zweiten Bereich (10') besteht.

10. Verbindungselement (7) nach Anspruch 1, 2, 3, 4, 5, 6, 7 oder 8,
das als Schraube (7) ausgebildet ist,
mit einem Schraubenkopf als zweiten Bereich (10)
und einem Gewinde als ersten Bereich (13).

11. Verbindungselement (7') nach Anspruch 1, 2, 3, 4, 5, 6, 7 oder 9,
das zwei Gewinde (13', 13'') und einen mittleren Bereich (10') aufweist,
der (10') kein Gewinde aufweist.

12. Verbindungselement nach Anspruch 10 oder 11,
wobei sich die einkristalline Struktur (SX) bis zu einer gewissen Dicke, aber höchstens teilweise in den Schraubenkopf (10) oder in den mittleren Bereich (10') erstreckt.

13. Verbindungselement nach Anspruch 10 oder 11,
bei dem sich die DS-Struktur (DS) bis zu einer gewissen Dicke, aber höchstens teilweise in den Schraubenkopf (10) oder in den mittleren Bereich (10') erstreckt.

14. Verbindungselement nach Anspruch 1, 2, 4, 5, 6, 7, 8, 9, 10, 11, 12 oder 13,
bei dem der zweite Bereich (10, 10') eine andere Legierung aufweist als der erste Bereich (13, 13', 13'').

15. Verbindungselement nach Anspruch 10, 11, 12, 13 oder 14, bei dem der Schraubenkopf (10) oder der mittlere Bereich (10') eine ungerichtet erstarrte Struktur (CC) aufweist und das Gewinde (13, 13', 13'') eine einkristalline Struktur (SX).

16. Verbindungselement nach Anspruch 10 oder 11,
bei dem der Schraubenkopf (10) oder der mittlere Bereich (10') und das Gewinde (13, 13', 13'') des Verbindungselements (7, 7') dieselbe Struktur (DS, SX) aufweisen.
